(19) Europäisches Patentamt
European Patent Office
Office européen des brevets

(11) **EP 4 446 576 A1**

(12) **EUROPEAN PATENT APPLICATION**

(43) Date of publication:
**16.10.2024 Bulletin 2024/42**

(21) Application number: **24161092.2**

(22) Date of filing: **04.03.2024**

(51) International Patent Classification (IPC):
***F02M 21/02*** [(2006.01)]     ***G05D 16/10*** [(2006.01)]

(52) Cooperative Patent Classification (CPC):
**F02M 21/0239; G05D 16/103**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2023  JP 2023045568**

(71) Applicant: **Nikki Co., Ltd.**
**Atsugi, Kanagawa 243-0801 (JP)**

(72) Inventors:
• **AIZAWA, Shutaro**
 **Atsugi-shi, 243-0801 (JP)**
• **SUENAGA, Naoya**
 **Atsugi-shi, 243-0801 (JP)**

(74) Representative: **Boult Wade Tennant LLP**
**Salisbury Square House**
**8 Salisbury Square**
**London EC4Y 8AP (GB)**

(54) **PRESSURE REGULATOR**

(57)     There is provided a regulator that can suppress the influence of a pressure reducing member (piston) on a secondary pressure setting value due to primary pressure fluctuation with a simple structure and does not cause an increase in sliding resistance due to axial deviation between the piston and a rod.

A regulator (1) includes a piston (60) and a rod (80). The piston (60) includes a valve body (61) having a through hole (62), a fitting hole (63) that is coaxial with the through hole (62) and has a larger diameter than the through hole, an inlet-side piston portion (64) that partitions an inside of a passage (20) into a decompression chamber (A) and an atmospheric pressure chamber (B), an outlet-side piston portion (65) that partitions the inside of the passage (20) into the atmospheric pressure chamber (B) and a pressure adjusting chamber (C), and a fluid passage (66) that communicates the decompression chamber (A) and the pressure adjusting chamber (C). The rod (80) is an independent component, is slidably fitted in the fitting hole (63), and airtightly partitions the inside of the fitting hole (63) to form a back pressure chamber (D).

FIG.1

EP 4 446 576 A1

**Description**

Technical Field

The present invention relates to a regulator used when a high-pressure fluid is depressurized to a desired pressure.

Background Art

In the related art, a regulator which is a device for depressurizing a high-pressure fluid and adjusting the pressure to a desired pressure is widely known, and for example, the regulator is used as a pressure adjusting device when high-pressure fuel such as compressed natural gas (CNG) stored in a fuel tank is supplied to an engine. However, the method is roughly divided into two types of a piston type and a diaphragm type.

A piston type regulator is disclosed in, for example, JP 2007-146875 A (Patent Literature 1) and JP 2013-41375 A (Patent Literature 2) and adjusts a balance between a primary pressure applied to a piston and a secondary pressure against the primary pressure, and sets a pressure of ejected fuel to a desired pressure (secondary pressure).

The regulator disclosed in Patent Literature 2 is illustrated in FIGS. 5 and 6. In a regulator 100, a pressure reducing member (piston) 102 that is displaced in the axial direction is provided inside a main body 101, a high pressure gas having a primary pressure P1 in a primary pressure chamber 103 is guided to a secondary pressure chamber 104 via the pressure reducing member 102, the pressure reducing member 102 is moved to the primary side against a spring 105 by the pressure of the gas guided to a secondary side, and a valve seat opening 106 of the main body 101 is closed by a seat portion 107. As a result, the pressure reducing member 102 is moved in the axis direction in a pressure balance between the primary pressure P1 acting on the primary side of the pressure reducing member 102 and a secondary pressure P2 acting on the secondary side so as to oppose the primary pressure P1, and as a result, the gas having the primary pressure P1 flowing in from a pressure reducing throttle between the valve seat opening 106 and the seat portion 107 is discharged as the gas having the desired secondary pressure P2.

Also, in the regulator 100, a rod 110 to be fitted into a fitting hole 109 provided in the axial direction of a first piston 108 of the pressure reducing member 102 is provided in a third piston 111 of the main body 101, and a back pressure chamber 112 that guides the primary pressure P1 into the pressure reducing member 102 in a state where the rod 110 is fitted into the fitting hole 109 is formed. The force acting on the pressure reducing member 102 from the primary pressure chamber 103 side is reduced by the primary pressure P1 guided to the back pressure chamber 112, and the influence of the pressure reducing member on the secondary pressure setting value due to the primary pressure fluctuation is suppressed.

However, in the method in which the rod 110 fixed in this way is fitted into the pressure reducing member (piston) 102, if shaking and inclination occur when the pressure reducing member 102 moves in the axis direction, there is a problem in that a falling load in the direction perpendicular to the axis is generated on the rod 110, and the sliding resistance is greatly increased and is developed to great decrease of the ejection pressure and abnormal abrasion of a contact portion.

In addition, for example, a regulator in which a rod is divided into two as in the invention disclosed in JP 2006-146776 A (Patent Literature 3) is also known. However, if the rod is divided into two in this way, it is concerned that the structure becomes complicated, which causes an increase in cost, and the number of friction parts increases, leading to deterioration of performance and occurrence of failure due to wear.

Citation List

Patent Literature

Patent Literature 1: JP 2007-146875 A
Patent Literature 2: JP 2013-41375 A
Patent Literature 3: JP 2006-146776 A

Summary of Invention

Technical Problem

Therefore, there has been a demand for a regulator that can suppress the influence of a pressure reducing member (piston) on a secondary pressure setting value due to primary pressure fluctuation with a simple structure and does not cause an increase in sliding resistance due to axial deviation between the piston and the rod.

Solution to Problem

A regulator of the present invention made to solve the above problem for depressurizing a high-pressure fluid to obtain a fluid adjusted to a desired pressure, the regulator including:

a body in which a passage having one end as a fluid input side and the other end as a fluid output side is formed;
a decompression chamber, an atmospheric pressure chamber, and a pressure adjusting chamber that are formed by sequentially partitioning the passage from the input side to the output side;
an annular valve seat provided at a position further on the input side than the decompression chamber in the passage;
a piston that is slidably disposed in the passage in an axial direction and partitions the decompression chamber, the atmospheric pressure chamber, and the pressure adjusting chamber;
a rod disposed to be fitted in the piston; and
a pressure adjusting spring that biases the piston toward the output side, in which
the piston includes:

an annular valve body that is brought into contact with or separated from the valve seat;
a through hole which is formed at a center of the valve body and through which a part of the fluid introduced from the input side is introduced;
a fitting hole which is coaxially formed to communicate with the through hole and has a larger diameter than the through hole;
an inlet-side piston portion that partitions the inside of the passage into the decompression chamber and the atmospheric pressure chamber;
an outlet-side piston portion that partitions the inside of the passage into the atmospheric pressure chamber and the pressure adjusting chamber; and
a fluid passage that communicates the decompression chamber and the pressure adjusting chamber, and
the rod is an independent component, is slidably fitted into the fitting hole, and airtightly partitions the inside of the fitting hole to form a back pressure chamber.

According to the above invention, the rod as a component independent of the other components is fitted into the fitting hole formed in the piston, so that the rod is configured to be displaceable in a direction perpendicular to the axis. Therefore, it is possible to suppress the influence of the piston on the secondary pressure set value due to the primary pressure fluctuation without increasing the sliding resistance due to axial deviation or the like.

In the present invention, in a case where the inner diameter of the fitting hole is the same as the seat diameter in which the valve seat and the valve body are in contact with each other, the load due to the fuel inlet pressure applied to the piston by the introduced high-pressure fluid can be offset, and the fluid adjusted to a desired pressure can be stably obtained even if the pressure of the introduced high-pressure fluid fluctuates.

In the present invention, in a case where, in the rod, one end surface facing the input side is a flat surface, and the other end surface facing the output side is a spherical surface or a convex surface, the rod comes into point contact when the rod and the body come into contact with each other, and thus the contact area is minimized. Therefore, the rod can smoothly move in the direction perpendicular to the axis with a small sliding resistance.

In the present invention, in a case where a seal member is mounted to the rod on a recessed groove formed in one end portion facing the input side, and the inside of the fitting hole is airtightly partitioned by the seal member, it is not required to mount the seal member on the piston side. Therefore, assembly becomes easy, and sealing failure does not occur even if the amount of movement of the rod is large.

Advantageous Effects of Invention

According to the present invention using the independent rod that is fitted in the piston and slidably disposed in the axial direction, it is possible to reduce the sliding resistance without generating extra force in the direction perpendicular to the axis while suppressing the influence of the piston on the secondary pressure set value due to the primary pressure fluctuation, and it is possible to suppress a significant decrease in the ejection pressure and abnormal abrasion of the contact portion.

Brief Description of Drawings

FIG. 1 is a cross-sectional view illustrating a valve open state in a preferred embodiment of the present invention;
FIG. 2 is a cross-sectional view illustrating a valve closed state of the embodiment illustrated in FIG. 1;
FIG. 3A is a diagram illustrating a case of a spherical surface and FIG. 3B is a diagram illustrating a case of a conical convex surface with a rounded distal end, with respect to the end surface shape of a rod in the embodiment illustrated in FIG. 1;
FIG. 4 is an enlarged view of the embodiment illustrated in FIG. 1;
FIG. 5 is a cross-sectional view illustrating a valve open state of a piston type regulator in the related art; and
FIG. 6 is a cross-sectional view illustrating a valve closed state of the regulator illustrated in FIG. 4.

Description of Embodiments

Hereinafter, embodiments of the present invention are described with reference to the drawings.

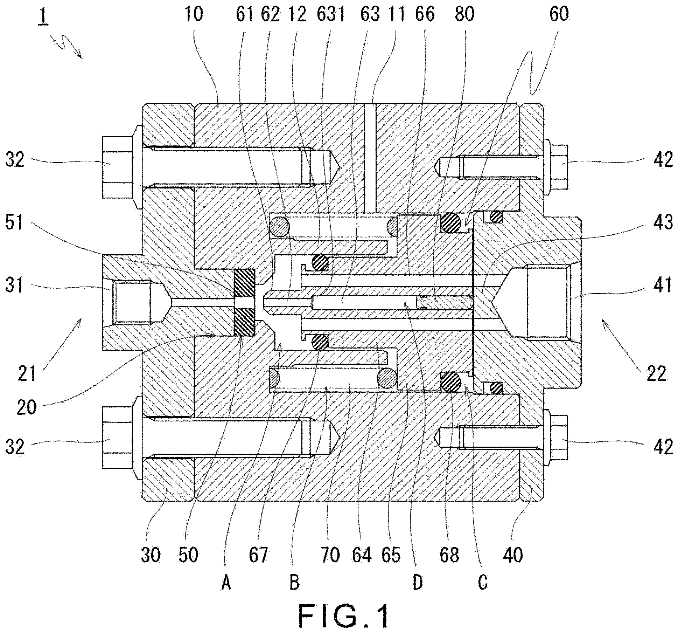

FIGS. 1 to 2 are cross-sectional views illustrating a preferred embodiment of a regulator 1 according to the present invention.

In the regulator 1, one opening end of a cylindrical passage 20 formed to penetrate a body 10 formed of metal, a hard synthetic resin, or the like is an input side 21 of a high-pressure fluid having a primary pressure P1, and the other opening end is an output side 22 of the pressure-adjusted fluid. An inlet cover 30 having an introduction port 31 for airtightly introducing the fluid and an outlet cover 40 having an extraction port 41 for airtightly extracting the fluid are respectively fixed to the input side 21 and the output side 22 by fixing tools 32 and 42 such as set screws.

The passage 20 is partitioned into a decompression chamber A, an atmospheric pressure chamber B, and a pressure adjusting chamber C, and the high-pressure fluid introduced from the introduction port 31 is depressurized in the decompression chamber A, then adjusted to a secondary pressure P2, that is a predetermined pressure in the pressure adjusting chamber C, and discharged from the extraction port 41. Note that reference numeral 11 denotes an air vent for causing the pressure in the atmospheric pressure chamber B to be equal to the atmospheric pressure by communicating the atmospheric pressure chamber B with the external space of the body 10.

An annular valve seat 50 in which a valve hole 51 is formed between the inlet cover 30 and the body 10 is mounted on the input side 21 of the passage 20.

The output side 22 of the passage 20 is provided with a piston 60 that is arranged slidably in the passage 20 in the axial direction and partitions the decompression chamber A, the atmospheric pressure chamber B, and the pressure adjusting chamber C, and a pressure adjusting spring 70 that biases the piston 60 in the direction of the output side 22.

The piston 60 is formed by integrally forming an annular valve body 61 that comes into contact with or is separated from the valve seat 50, a through hole 62 that is formed in the center of the valve body 61 and through which a part of the fluid introduced from the input side 21 is introduced, a fitting hole 63 formed to coaxially communicate with the through hole 62 and having a larger diameter than the through hole 62, an inlet-side piston portion 64 that partitions the inside of the passage 20 into the decompression chamber A and the atmospheric pressure chamber B, an outlet-side piston portion 65 that partitions the inside of the passage 20 into the atmospheric pressure chamber B and the pressure adjusting chamber C, and four fluid passages 66 that communicate the decompression chamber A and the pressure adjusting chamber C.

The pressure adjusting spring 70 is set to have a strength so as to be balanced with a pressure load received by the piston 60, is mounted in the atmospheric pressure chamber B to come into contact with the outlet-side piston portion 65 of the piston 60, and biases the piston 60 to the output side 22 (in a valve open direction)

A cylindrical boss 12 is formed between the decompression chamber A and the atmospheric pressure chamber B in the passage 20, and an inner diameter of the boss 12 is substantially identical to an outer diameter of the inlet-side piston portion 64.

Note that reference numeral 67 denotes a seal member externally fitted to the inlet-side piston portion 64, and reference numeral 68 denotes a seal member externally fitted to the outlet-side piston portion 65.

An inner diameter of the fitting hole 63 is the same as a seat diameter ds in which the valve seat 50 and the valve body 61 are in contact with each other. A rod 80 having an outer diameter substantially identical to an inner diameter of the fitting hole 63 is disposed to be fit in the fitting hole 63. In the present invention, the rod 80 is an independent component, is slidably fitted in the fitting hole 63, and airtightly partitions the inside of the fitting hole 63 to form a back pressure chamber D.

In this manner, by airtightly and slidably fitting the rod 80 into the fitting hole 63, the load due to the fuel inlet pressure (primary pressure P1) applied to the inlet-side piston portion 64 can be offset by receiving the load by the rod 80, and the fluid adjusted to a desired pressure can be stably obtained even if the pressure of the introduced high-pressure fluid fluctuates.

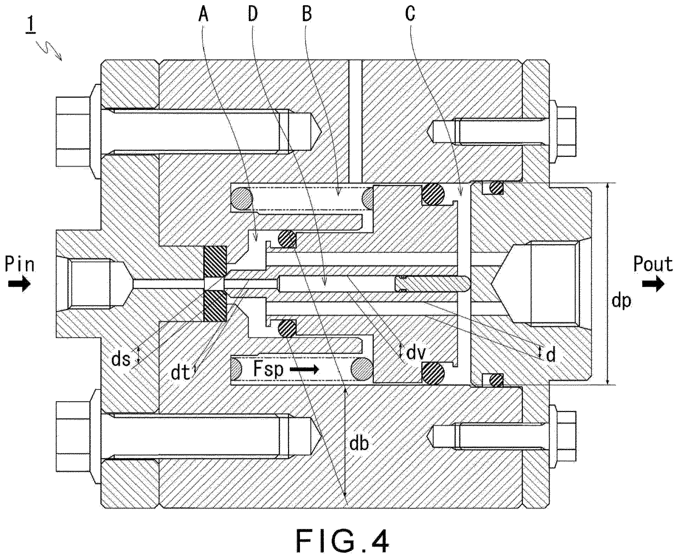

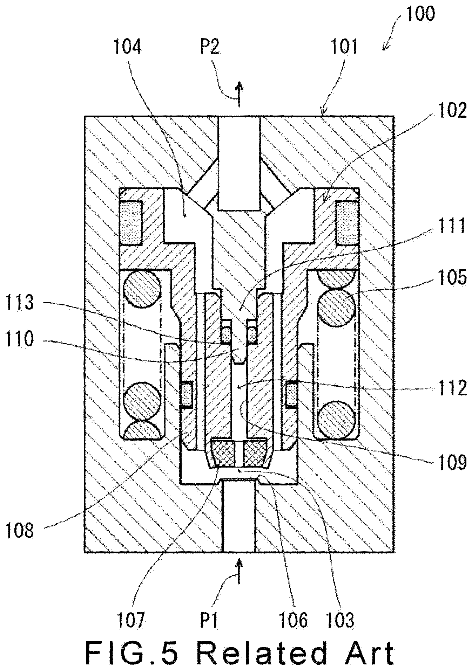

Here, a difference from a regulator 2 in the related art illustrated in FIGS. 4 and 5 is that the rod 80 is fitted into the fitting hole 63 formed in the piston 60 as a component independent of other components, and the rod 80 is configured to be displaceable in the direction perpendicular to the axis.

The rod 80 has a columnar shape having a predetermined length, the position thereof is regulated by a center portion 43 of the outlet cover 40, and thus the rod is not detached from the fitting hole 63 of the piston 60.

In the rod 80 fitted into the fitting hole 63 of the piston 60, one end surface 81 facing the input side 21 is formed as a flat surface, and the other end surface 82 facing the output side 22 is formed as a spherical surface, and thus the rod can be displaced in the direction perpendicular to the axis together with the displacement of the piston 60 while being in contact with the outlet cover 40.

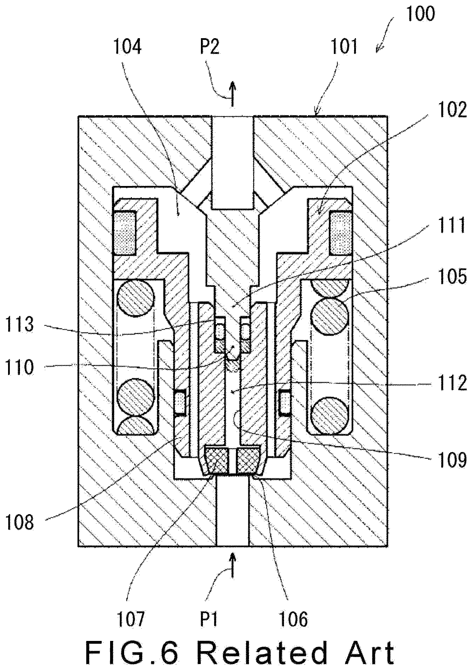

As described above, by using the rod 80, which is an independent component, instead of fitting a fixed rod into the pressure reducing member (piston) as in the regulator 2 in the related art illustrated in FIGS. 5 and 6, even if shaking and inclination occur when the piston 60 slides in the axial direction, the rod can be displaced in the direction perpendicular to the axis together with the displacement of the piston 60. Therefore, an extra force in the direction perpendicular to the axis is not generated, the sliding resistance can be reduced, and thus a large decrease in ejection pressure and abnormal abrasion of the contact portion can be suppressed.

In addition, at this time, by forming the end surface 82 as a spherical surface, when the rod 80 and the outlet cover 40 are brought into contact with each other, point contact occurs, and the contact area is minimized, so that it is possible to smoothly move in the direction perpendicular to the axis with a small sliding resistance.

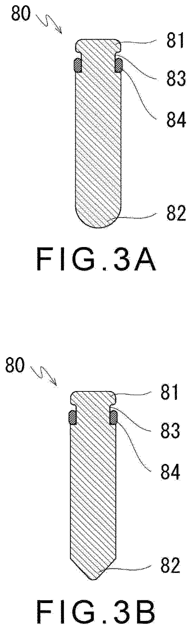

Note that the shape of the other end surface 82 facing the output side 22 is not limited to the spherical surface (see FIG. 3A) and may be a conical convex surface with a rounded distal end (see FIG. 3B).

In the rod 80 fitted into the fitting hole 63 of the piston 60, a seal member 84 is mounted in a recessed groove 83 formed in one end portion 81 facing the input side 21, and the inside of the fitting hole 63 is airtightly partitioned by the seal member 84.

As described above, by mounting the seal member 84 to the rod 80, it is not required to attach the seal member to the piston side so that assembly is easy, and sealing failure does not occur even if the amount of movement of the rod is large.

The load applied to the piston is described below with reference to FIG. 4.

When a fuel inlet pressure is Pin, a fuel outlet pressure is Pout, a load with which the pressure adjusting spring 70 biases the piston 60 toward an output side 22 (valve open direction) is Fsp, a seat diameter in which the valve seat 50 and the valve body 61 are in contact with each other is ds, a fuel seal diameter in which the boss 12 and the seal member 67 are in contact with each other is db, an inner diameter of the (four) fluid passages 66 of the piston 60 is d, a pressure receiving diameter of the outlet-side piston portion 65 is dp, an inner diameter of the fitting hole 63 is dv, and an inner diameter of the through hole 62 is dt, a balance equation of the load applied to the piston 60 is as follows.

[Mathematical Formula 1]

$$\frac{\pi}{4} \times \{(ds)^2 - (dt)^2\} \times Pin + \frac{\pi}{4} \times \{(db)^2 - 4 \times (d)^2 - (ds)^2\} \times Pout + Fsp$$

$$= \frac{\pi}{4} \times \{(dp)^2 - 4 \times (d)^2 - (db)^2\} \times Pout + \frac{\pi}{4} \times \{(dv)^2 - (dt)^2\} \times Pin$$

is rearranged to:

[Mathematical Formula 2]

$$\frac{\pi}{4} \times \{(ds)^2 - (dv)^2\} \times Pin + Fsp = \frac{\pi}{4} \times \{(dp)^2 - (db)^2 + (ds)^2\} \times Pout$$

Here, since ds ≈ dv, the above formula is further rearranged as follows.

[Mathematical Formula 3]

$$Fsp = \frac{\pi}{4} \times \{(dp)^2 - (db)^2 + (ds)^2\} \times Pout$$

It can thus be seen that the load due to the fuel inlet pressure (Pin) applied to the piston can be offset.

A back pressure receiving surface 631 that causes back pressure to act on the piston 60 in the direction of the decompression chamber A is formed in the back pressure chamber D. The back pressure receiving surface 631 is formed by a portion in which the diameter of the through hole 62 is smaller than the diameter of the fitting hole 63. In the present embodiment, the seat diameter ds and the diameter of the back pressure receiving surface 631 are substantially the same.

The operation of the regulator 1 having the above configuration is described below.

First, when a high-pressure fluid is introduced from the introduction port 31, the fluid passes through the valve hole 51 formed in the valve seat 50 and flows into the decompression chamber A.

At this time, in the initial stage, the piston 60 is pushed by the pressure adjusting spring 70, the valve seat 50 and the valve body 61 are in the valve open state of being separated from each other, and the fluid flows into the pressure adjusting chamber C through the fluid passage 66 (see FIG. 1).

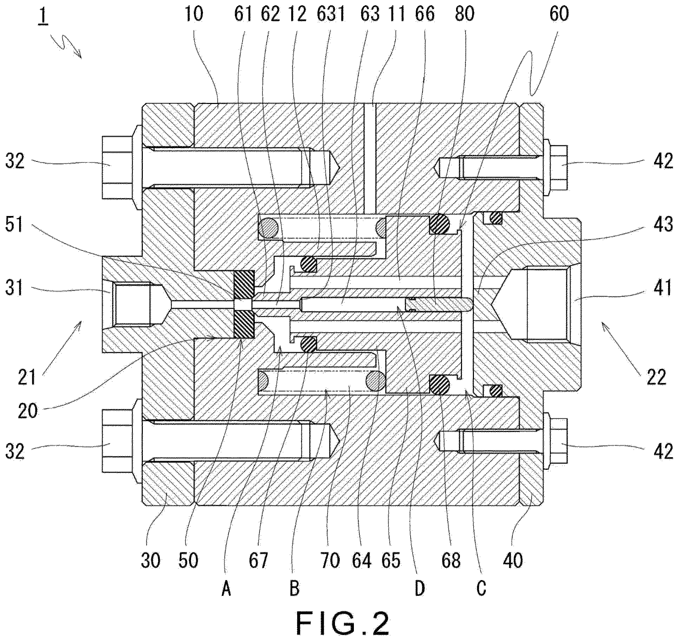

Thereafter, as the pressure in the pressure adjusting chamber C increases due to the fluid flowing into the pressure adjusting chamber C side, the piston 60 is pushed toward the input side 21, and the valve seat 50 and the valve body 61 are in the valve closed state of being brought into contact with each other at a point in time when the pressure in the pressure adjusting chamber C reaches a predetermined pressure, and the inflow of the fluid is blocked (see FIG. 2).

Then, when the fluid in the pressure adjusting chamber C is discharged from the extraction port 41 and the pressure in the pressure adjusting chamber C decreases, the piston 60 is pushed by the pressure adjusting spring 70, and the valve seat 50 and the valve body 61 return to the valve open state of being separated from each other (see FIG. 1).

The pressure of the fluid discharged by repeating the above operation and changing the gap area between the valve seat 50 and the valve body 61 is kept constant.

Reference Signs List

| | |
|---|---|
| 1 | regulator |
| 10 | body |
| 11 | air vent |
| 12 | boss |
| 20 | passage |
| 21 | input side |
| 22 | output side |
| 30 | inlet cover |
| 31 | introduction port |
| 32 | fixing tool |
| 40 | outlet cover |
| 41 | extraction port |
| 42 | fixing tool |
| 43 | center portion |
| 50 | valve seat |
| 51 | valve hole |
| 60 | piston |
| 61 | valve body |
| 62 | through hole |
| 63 | fitting hole |
| 64 | inlet-side piston portion |
| 65 | outlet-side piston portion |
| 66 | fluid passage |
| 67 | seal member |

| | |
|---|---|
| 68 | seal member |
| 70 | pressure adjusting spring |
| 80 | rod |
| 81 | end surface |
| 82 | end surface |
| 83 | recessed groove |
| 84 | seal member |
| A | decompression chamber |
| B | atmospheric pressure chamber |
| C | pressure adjusting chamber |
| Pin | fuel inlet pressure |
| Pout | fuel outlet pressure |
| Fsp | load of pressure adjusting spring |
| ds | seat diameter |
| db | fuel seal diameter |
| d | inner diameter of fluid passage |
| dp | pressure receiving diameter of outlet-side piston portion |
| dv | inner diameter of fitting hole |
| dt | inner diameter of through hole |

**Claims**

1.  A regulator for depressurizing a high-pressure fluid to obtain a fluid adjusted to a desired pressure, the regulator comprising:

    a body in which a passage having one end as a fluid input side and the other end as a fluid output side is formed;
    a decompression chamber, an atmospheric pressure chamber, and a pressure adjusting chamber that are formed by sequentially partitioning the passage from the input side to the output side;
    an annular valve seat provided at a position further on the input side than the decompression chamber in the passage;
    a piston that is slidably disposed in the passage in an axial direction and partitions the decompression chamber, the atmospheric pressure chamber, and the pressure adjusting chamber;
    a rod disposed to be fitted in the piston; and
    a pressure adjusting spring that biases the piston toward the output side, **characterized in that**
    the piston includes:

    an annular valve body that is brought into contact with or separated from the valve seat;
    a through hole which is formed at a center of the valve body and through which a part of the fluid introduced from the input side is introduced;
    a fitting hole which is coaxially formed to communicate with the through hole and has a larger diameter than the through hole;
    an inlet-side piston portion that partitions the inside of the passage into the decompression chamber and the atmospheric pressure chamber;
    an outlet-side piston portion that partitions the inside of the passage into the atmospheric pressure chamber and the pressure adjusting chamber; and
    a fluid passage that communicates the decompression chamber and the pressure adjusting chamber, and the rod is an independent component, is slidably fitted into the fitting hole, and airtightly partitions the inside of the fitting hole to form a back pressure chamber.

2.  The regulator according to claim 1, **characterized in that** an inner diameter of the fitting hole is the same as a seat diameter in which the valve seat and the valve body are in contact with each other.

3.  The regulator according to claim 1, **characterized in that**, in the rod, an end surface on the input side, which is one end, is a flat surface, and an end surface on the output side, which is the other end, is a spherical surface or a convex surface.

4.  The regulator according to claim 1, **characterized in that** a seal member is mounted to the rod on a recessed groove formed in an end portion on the input side, which is one end, and the inside of the fitting hole is airtightly partitioned by the seal member.

FIG.1

**FIG.2**

FIG.3A

FIG.3B

FIG.4

FIG.5 Related Art

FIG.6 Related Art

Europäisches
Patentamt

European
Patent Office

Office européen
des brevets

**EUROPEAN SEARCH REPORT**

Application Number

EP 24 16 1092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/098057 A1 (KORE OUTDOOR US INC [US]) 10 May 2024 (2024-05-10) * figure 3A * | 1,2 | INV.<br>F02M21/02<br>G05D16/10 |
| A,D | JP 2013 041375 A (KAWASAKI HEAVY IND LTD) 28 February 2013 (2013-02-28) * abstract; figure 1 * | 1-4 | |
| A,D | JP 2006 146776 A (KAWASAKI PRECISION MACH LTD) 8 June 2006 (2006-06-08) * abstract; figure 1 * | 1-4 | |
| A,D | JP 2007 146875 A (HAMAI IND LTD; HONDA MOTOR CO LTD) 14 June 2007 (2007-06-14) * abstract; figure 1 * | 1-4 | |

**TECHNICAL FIELDS SEARCHED (IPC)**

F02M
G05D

The present search report has been drawn up for all claims

| Place of search | Date of completion of the search | Examiner |
|---|---|---|
| Munich | 29 August 2024 | Torle, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 1092

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | | Publication date | Patent family member(s) | | Publication date |
|---|---|---|---|---|---|
| WO 2024098057 | A1 | 10-05-2024 | NONE | | |
| JP 2013041375 | A | 28-02-2013 | NONE | | |
| JP 2006146776 | A | 08-06-2006 | JP 4464259 B2 | | 19-05-2010 |
| | | | JP 2006146776 A | | 08-06-2006 |
| JP 2007146875 | A | 14-06-2007 | JP 4714008 B2 | | 29-06-2011 |
| | | | JP 2007146875 A | | 14-06-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007146875 A
- JP 2013041375 A

- JP 2006146776 A